Europäisches Patentamt

(19) European Patent Office

Office européen des brevets

(11) Publication number: **0 256 991 B1**

(12) # EUROPEAN PATENT SPECIFICATION

(45) Date of publication of patent specification :
09.10.91 Bulletin 91/41

(51) Int. Cl.⁵ : **B65G 47/24**

(21) Application number : **87830140.7**

(22) Date of filing : **10.04.87**

(54) **Device for transferring and simultaneously tilting articles.**

(30) Priority : **11.04.86 IT 2005686**

(43) Date of publication of application :
**24.02.88 Bulletin 88/08**

(45) Publication of the grant of the patent :
**09.10.91 Bulletin 91/41**

(84) Designated Contracting States :
**CH DE FR GB LI**

(56) References cited :
**FR-A- 1 345 498
FR-A- 2 592 014**

(73) Proprietor : **OFF. MECCANICHE VIOTTO S.r.l.**
**Via Brusa 34**
**Canzo (Como) (IT)**

(72) Inventor : **Visconti, Otto**
**Via Carducci 11**
**I-20123 Milano (IT)**

(74) Representative : **Adorno, Silvano et al**
**c/o SOCIETA' ITALIANA BREVETTI S.p.A. Via**
**Carducci, 8**
**I-20123 Milano (IT)**

## Description

The present invention is directed to a device for transferring and tilting articles, in particular of small size, possibly for being processed on two opposite faces.

It is known that generally in an automatic system it is often necessary to transfer an article, such as a piece to be worked, from a line of production to another or from a machine to another with contemporaneous tilting of the article itself. To this effect various types of apparatus are used, from the simplest mechanical arms to the most sophisticated robot-like equipments.

These known devices are however used in handling articles with a size which is not too small and thereby can be catched as suitably as possible for their lifting, rotation until their tilting, and final positioning on the receiving surface, where frequently the articles have to be further processed on a face therof which is opposite to the one processed at the initial position, even though these movements can be required also in different cases and situations. For example from FR-A-1345498 a rotating device is already known for transferring longitudinally extended and heavy products such as metal bars, billets, blooms and plates, not particularly for the tilting thereof, but mainly for some further treatment (cooling, quenching, pickling) in a pit under the transfer plane. This requires that each workpiece is caused to lower during the transfer, by e.g. a rotation of the device in the counter clockwise direction when moving from left to the right and viceversa (clockwise direction for a feed movement from the right to the left).

In handling small articles the technique does not offer at present any efficient means but simple pushers, such as when feeding pieces in the minting of coins, and in practice it is impossible to transfer and tilt in a quick sequence small items, especially if the small size is shown by the side provided for their clamping. In this case, particularly if this side is also shaped so as to render difficult its taking, when it is for example with tapered walls, magnetically or vacuum-actuated equipments for lifting articles would be in practice useless, since sidely clamping devices would be however necessary for the tilting action.

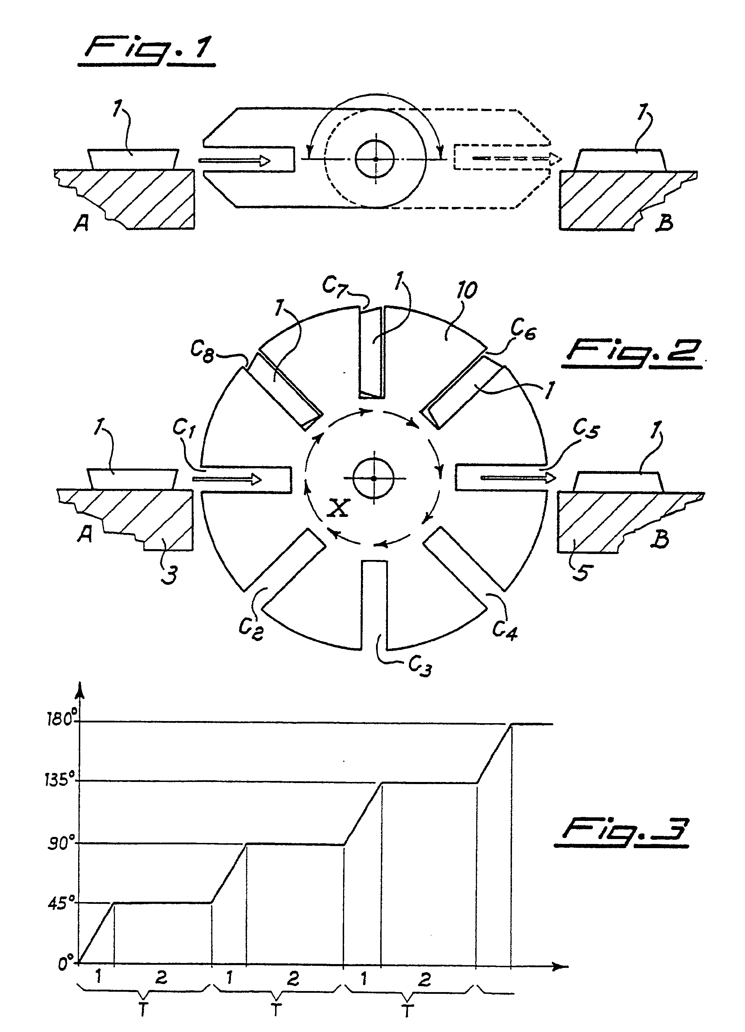

A solution such as represented diagrammatically on Fig. 1 of the drawings could be provided, wherein an arm is formed with a recess for housing a piece 1 being pushed by a known means, and thereafter, upon a rotation of 180°, reaches the position shown in phantom lines thus allowing piece 1 to be positioned in B, upon another operation of known pushing means. However such a solution is not satisfactory for its inherent slowness, due to the unavoidable idle time periods during which the arm carries out these rotations of 180°.

The object of the present invention is to provide an apparatus which does not show the above-mentioned drawbacks by performing the transfer and contemporaneous tilting of the articles from a first position to a second position so that on the latter each article rests with the surface opposed to the initial base surface, the apparatus comprising known pushing means and rotating means for a rotation between said two positions, said rotating means including a cylindrical body rotatably mounted on an axis substantially co-planar with the support plane defined by said two positions, said cylindrical body being forward with a plurality of n peripheral grooves (n being an even number), each of them being arranged to house one of the articles to be transferred and tilted, in such a manner not to cause idle time periods and bottleneck chokes in a high-speed automatic line.

This is obtained by means of the fact that said axis is controlled by an actuating means to carry out successively elementary rotations by an angle of 360°: n each time in the clockwise direction for a transfer from left to the right and counterclockwise from the right to the left; between two successive elementary rotations there being provided a period of time in which said cylindrical body is stationary and during which an article is fed from said first position into one of said n grooves by said pushing means and at the same time another article is discharged from the diametrally opposite groove toward said second position.

According to a preferred embodiment of the present invention, the above-mentioned cylindrical body is partially housed in a free space defined between said two positions, with said pushing means being operated in a radial direction with respect to the said axis, which is centrally positioned between the first and the second position.

According to another embodiment of the invention said first and second positions are both provided on one uninterrupted supporting surface which in a first instance is made of a linear conveyor and in a second instance corresponds to a single turntable with the said cylindrical body being mounted next to said surface, having a diametral plane thereof flush with the latter and at a minimum distance therefrom, said grooves being charged and discharged in a direction parallel to the axis of said cylindrical body.

Further objects, advantages and features of the device according to the invention will be more clearly apparent from the following detailed description of some embodiments thereof,'given by way of non-limiting example with reference to the annexed drawings, wherein:

FIGURE 1 schematically shows a possible embodiment with rotating arm, already mentioned and not being a part of the present invention;

FIGURE 2 shows a diagrammatic front view of one embodiment of the device according to the invention;

FIGURE 3 shows a graph of the timing diagram for the device of Fig. 2;

FIGURES 4, 4a respectively show a front view and a plant view from above, both diagrammatic, of a second embodiment of the invention itself, associated with a linear conveyor; and

FIGURES 5, 5a show views respectively similar to Figs. 4, 4a and related to a turntable.

In the drawings the article to be transferred and tilted, designated 1, has been represented by way of example as a truncated pyramid with square base having a substantially flat shape, i.e. with a minimum size in height, so as to cause difficulties when clamped laterally by a known means. The first, starting position of article 1 is always indicated as A, and the second, receiving or final position is indicated as B. The possible embodiment with rotating arm, shown in Fig. 1 and not being part of the present invention has already been discussed above.

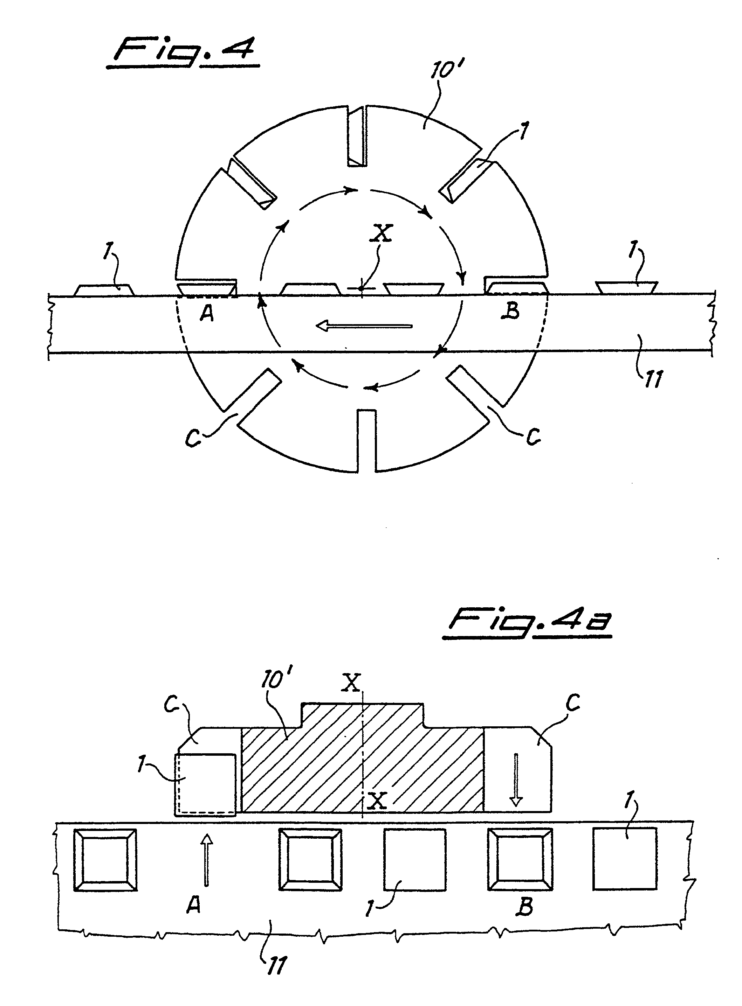

Referring now to Fig. 2, wherein an article 1 has to be transferred and at the same time tilted from position A to position B, between these two positions there is mounted the rotation axis X of a cylindrical body 10 the diameter of which covers substantially almost the whole minimum distance between said two positions A and B, except for a small clearance. On the cylindrical body 10 there is provided a plurality of radial grooves, here in number of eight, $C_1$-$C_8$ equally spaced along the periphery of body 10, each of them being arranged to receive one of said articles 1. According to the direction of arrows considered in Fig. 2 the article is pushed from the position A by a means well-known in the art into the groove $C_1$ being at that moment flush with such a position. The cylindrical body 10 rotates as it is mounted on the axis of an actuator (not shown), so as to accomplish each time a rotation of 360°/n, if $n$ is the number of grooves $C_1$-$C_n$. After a n/2 number of these elementary rotations, between each two of which a stop interval is provided, as shown in the diagram of Fig. 3, the article 1 initially positioned in $C_1$ will assume the position initially occupied by $C_5$ upon a total rotation of 180°, and therefrom it will be pushed to the position B by a similar known means. However in the meantime another article 1 has been received respectively in the successive grooves $C_2$, $C_3$, $C_4$ and, when discharging from $C_1$, a fifth article is housed into $C_5$. The device then has a behaviour like a rotating magazine which, when in usual operation with all the grooves loaded, transfers one article in the desired way no longer at each rotation of 180° like in Fig. 1, but every 180° divided by n/2 (in this case 45° as n=8).

If pieces 1 have to be worked, such as by grinding on both the major surfaces, positions A, B are respectively the mutually nearest peripheral zones of a first and a second turntable 3, 5 of a grinding machine (not shown). The transfer of the piece from a table to the other in practice occurs at the same time and with the shortest delay required therefor without the necessity of additional time for each rotation from position A to B. The only idle time period is provided during the first 180° rotation, until the n/2 grooves of a half cylinder are loaded, whereas with the solution of Fig. 1 this idle time period would be repeated during the whole operation. Thus it is possible to work at a very high speed and to transfer up to 120 articles every minute without any problem.

According to another embodiment, shown in the subsequent figures, both initial and final positions A, B lie, spaced apart, on the same surface which in Figs. 4, 4a is that of a linear conveyor. In this embodiment the cylindrical body 10' still has a number of radial grooves C which will be open sidely to allow loading and unloading of the articles 1 therefrom in a direction that is no longer radial as in Fig. 2, but parallel to the rotation axis X of the body 10', as it is clearly shown in the plan view of Fig. 4a. Furthermore in this case the distance between two diametrally opposite grooves, which is again substantially the same as the distance between the positions A-B, will also correspond to the distance between the positions on the mobile support 11 occupied by two non successive articles 1 having an even number of said articles therebetween. Thus the article taken at A, upon a rotation of 180° for its tilting is caused to rest again on the support 11 at B being upstream of the initial position, as seen according to the arrow indicating the forward or feed direction of the conveyor 11, along which the tilted article moves again. It is like as on the conveyor 11 two alternate series of articles 1 were positioned which show opposite faces free upwards.

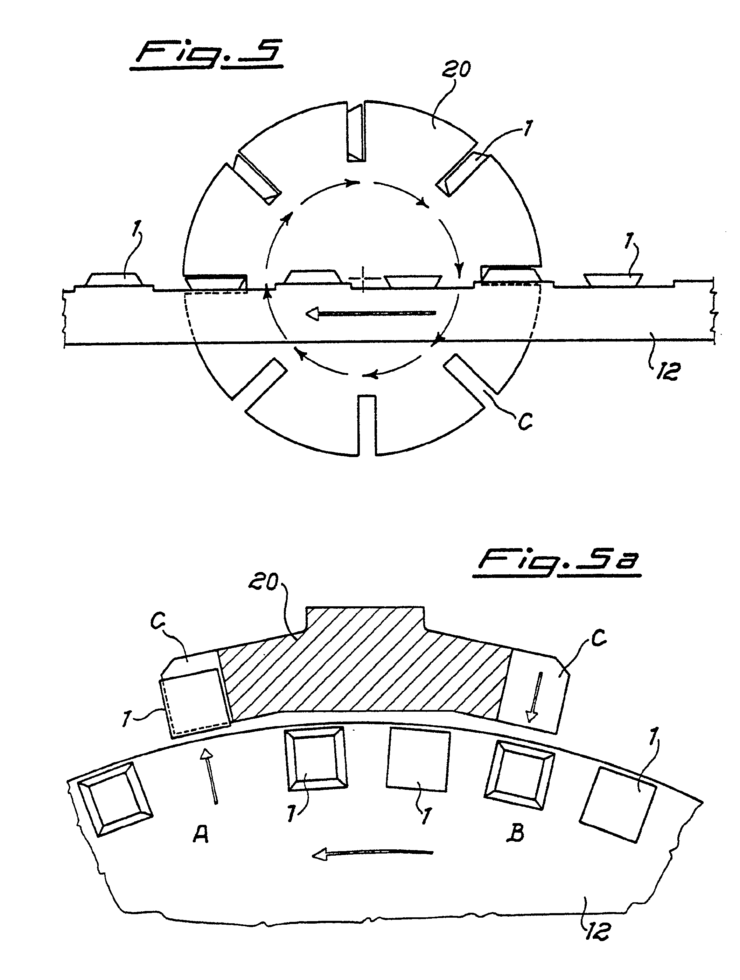

In the case illustrated on Figs. 5, 5a the continuous surface on which the two positions A, B lie is provided by a worktable 12 for grinding or linishing, as if it comprised therein both the tables positioned in Fig. 2 on the right and left hand of the cylindrical body 10, now designated 20. As it is seen in Fig. 5 the table 12 has been represented with thicker or thinner zones, respectively alternate each other so as to support the articles 1 to be worked on the free face and respectively those already worked. As a matter of fact each piece will have to carry out two complete paths on the same table, before and after tilting. In general this solution could be preferred when the main problem is the space saving. Of course in this case, owing to the circular configuration of the mobile support 12, formed of a turntable, the front face of the cylindrical body 20 which is adjacent to the periphery of the table itself will show a concave arc shape, complementary to the circle arc between the two positions A and B.

It should be appreciated that, in spite of the foregoing, the use of the device according to the invention is not meant to be restricted to articles of small size, as it can be generally used with items to be transferred and tilted irrespective of their size.

Possible additions and/or variations can be performed by those skilled in the art with respect to the above-described and illustrated embodiments of the device according to the invention without departing from the scope of the invention itself. In particular, in addition to the known suitable pushing means for loading and unloading the grooves, there will be provided synchronization means for the rotations of the cylindrical body 10, 10′ and its controlling actuator with the forward movements of the tables and conveyors 11 and in general the feed and discharge means for feeding articles 1 in A and discharging the same from position B. Furthermore each groove C could be provided with clamping means to hold article 1 during rotation, such a means being for example provided by a suitable shape of the groove or a real clamping means, such as of the spring type.

## Claims

1. A device for transferring and contemporaneously tilting articles (1) from a first position (A) to a second position (B) so that on the latter each article (1) rests with the surface opposed to the initial base surface in the first position (A), comprising known pushing means and rotating means for a rotation between said positions (A) and (B) , said rotating means including a cylindrical body (10, 10′, 20) rotatably mounted on an axis (X) substantially co-planar with the support plane defined by said first and second positions (A, B), said cylindrical body (10, 10′, 20) being formed with a plurality of peripheral grooves $(C_1, C_2,....C_n)$ with $\underline{n}$ being an even number, each of them being arranged to house one of the articles (1) to be transferred and tilted, characterized by the fact that said axis (X) is controlled by an actuating means to carry out successively elementary rotations by an angle of 360°:n each time in the clockwise direction for a transfer from left to the right and counterclockwise from the right to the left; between two successive elementary rotations there being provided a period of time in which said cylindrical body is stationary and during which an article (1) is fed from said first position (A) into one of said grooves $(C_1, ...C_n)$ by said pushing means and at the same time another article (1) is discharged from the diametrally opposite groove towards the position (B).

2. A device according to claim 1, wherein said fist and second positions (A, B) define therebetween a free space substantially covered, except for a minimum clearance, by said cylindrical body (10), characterized by the fact that said pushing means both for feeding and discharging articles (1) into or respectively from the related groove, operates in a radial direction with respect to the axis (X) positioned centrally between (A) and (B).

3. A device according to claim 1, wherein said first and second positions (A, B) are provided on one single continuous plane surface (11, 12), characterized by said cylindrical body (10′, 20) being positioned on one side of said surface, the distance between any two diametrally opposed grooves $(C_1, ... C_n)$ thereof being the same as the distance between said first and second positions (A, B), with the action of said pushing means for feeding and discharging articles (1) from said grooves being directed parallel to said axis (X).

4. A device according to claim 3, wherein said first and second positions (A, B) are both provided on the surface of a linear conveyor (11) bearing a number of equally spaced articles (1) alternately resting with a surface and the opposite one, between said first and second positions (A, B) there being provided an even number of said articles (1).

5. A device according to claim 3, wherein said first and second positions (A, B) are both at the periphery of a turntable (12) having zones of alternately greater and lower thickness at the associated zones where articles (1) rest.

## Patentansprüche

1. Vorrichtung zum Überführen und gleichzeitigen Kippen von Gegenständen (1) aus einer ersten Position (A) in eine zweite Position (B), so daß in der letzteren jeder Gegenstand (1) auf der Fläche aufliegt, die der ursprünglichen Basisfläche in der ersten Position (A) gegenüberliegt, mit einer bekannten Schiebeeinrichtung und einer Dreheinrichtung zum Drehen zwischen den Positionen (A) und (B), wobei die Dreheinrichtung einen zylindrischen Körper (10, 10′, 20) aufweist, der drehbar auf einer Achse (X) angeordnet ist, die im wesentlichen in derselben Ebene liegt wie die durch die erste und die zweite Position (A, B) definierte Auflageebene, und wobei der zylindrische Körper (10, 10′, 20) mit einer Vielzahl von Umfangsschlitzen (C1, C2, ..., Cn) ausgebildet ist, wobei $\underline{n}$ eine gerade Zahl ist und jeder Umfangsschlitz so angeordnet ist, daß er einen der zu überführenden und zu kippenden Gegenstände (1) aufnimmt, dadurch gekennzeichnet, daß die Achse (X) von einer Betätigungseinrichtung so gesteuert ist, daß sie nacheinander Teil-Umdrehungen um einen Winkel von 360° : n ausführt, und zwar jeweils im Uhrzeigersinn für eine Überführung von links nach rechts und im Gegenuhrzeigersinn von rechts nach links; daß zwischen zwei aufeinanderfolgenden Teil-Umdrehungen ein Zeitintervall vorgesehen ist, in welchem der zylindrische Körper ortsfest ist und während dessen ein Gegenstand (1) von der Schiebeeinrichtung aus der ersten Position (A) in einen der Schlitze (C1, ..., Cn) eingeführt und gleichzeitig ein anderer Gegenstand (1) aus dem diametral gegenüberliegenden Schlitz in Richtung der Position (B) ausgetragen wird.

2. Vorrichtung nach Anspruch 1, wobei die erste und die zweite Position (A, B) zwischeneinander einen freien Raum bilden, der mit Ausnahme eines minimalen Spielraumes im wesentlichen von dem zylindrischen Körper (10) eingenommen wird, dadurch gekennzeichnet, daß die Schiebeeinrichtung, die sowohl zum Zuführen als auch zum Austragen von Gegenständen (1) in den bzw. aus dem zugeordneten Schlitz dient, in einer Radialrichtung relativ zu der Achse (X) wirksam ist, die zentral zwischen (A) und (B) positioniert ist.

3. Vorrichtung nach Anspruch 1, wobei die erste und die zweite Position (A, B) auf einer einzigen durchgehenden ebenen Fläche (11, 12) vorgesehen sind, dadurch gekennzeichnet, daß der zylindrische Körper (10', 20) auf einer Seite dieser Fläche positioniert ist und daß die Entfernung zwischen jeweils zwei seiner diametral gegenüberliegenden Schlitze (C1, ..., Cn) gleich der Entfernung zwischen der ersten und der zweiten Position (A, B) ist, wobei die Schiebeeinrichtung zum Zuführen und Austragen von Gegenständen (1) in die bzw. aus den Schlitzen parallel zu der Achse (X) ausgerichtet ist.

4. Vorrichtung nach Anspruch 3, wobei die erste und die zweite Position (A, B) auf der Oberfläche eines linearen Förderers (11) vorgesehen sind, der eine Anzahl von gleich beabstandeten Gegenständen (1) trägt, die abwechselnd nacheinander mit einer Oberfläche bzw. mit der gegenüberliegenden Oberfläche aufliegen, wobei zwischen der ersten und der zweiten Position (A, B) eine gerade Zahl von Gegenständen (1) vorgesehen ist.

5. Vorrichtung nach Anspruch 3, wobei die erste und die zweite Position (A, B) am Außenumfang eines Drehtisches (12) vorgesehen sind, der Zonen mit abwechselnd aufeinanderfolgender größerer und geringerer Dicke an den zugeordneten Zonen aufweist, an denen die Gegenstände (1) aufliegen.

## Revendications

1. Dispositif de transfert et de retournement simultané d'objets (1) depuis une première position (A) jusqu'à une seconde position (B) de façon que dans cette dernière position chaque objet (1) repose sur la surface opposée à la surface de base initiale qu'il avait dans la première position (A), comprenant des moyens poussoirs déjà connus et des moyens de rotation pour effectuer une rotation entre lesdites deux positions (A) et (B), lesdits moyens de rotation comprenant une pièce cylindrique (10, 10', 20) montée en rotation sur un axe (X) sensiblement coplanaire avec le plan support défini par lesdites première et seconde positions (A, B), ladite pièce cylindrique (10, 10', 20) étant formée avec un ensemble d'encoches périphériques ($C_1$, $C_2$, .... $C_n$) où $n$ est un nombre pair et dont chacune est agencée pour recevoir l'un des objets (1) à transférer et à retourner, caractérisé par le fait que ledit axe (X) est commandé par un moyen actionneur afin d'effectuer des rotations élémentaires successives sur un angle de 360°:n chaque fois dans le sens des aiguilles d'une montre pour un transfert de gauche à droite et dans le sens inverse des aiguilles d'une montre pour un transfert de droite à gauche ; entre deux rotations élémentaires successives, est prévu un intervalle de temps au cours duquel ladite pièce cylindrique est fixe et au cours duquel un objet (1) est amené à partir de ladite première position (A) dans l'une desdites encoches ($C_1$....$C_n$) par lesdits moyens poussoirs et au cours duquel également un autre objet (1) est dégagé de l'encoche diamétralement opposée en direction de la position (B).

2. Dispositif selon la revendication 1, dans lequel lesdites première et seconde positions (A, B) délimitent entre elles un espace libre sensiblement comblé, à l'exception d'un écart minimal, par ladite pièce cylindrique (10), caractérisé par le fait que lesdits moyens poussoirs servant à la fois à amener et à décharger des objets (1) dans ou respectivement en dehors de l'encoche concernée, fonctionnent dans une direction radiale par rapport à l'axe (X) placé au centre entre (A) et (B).

3. Dispositif selon la revendication 1, dans lequel lesdites première et seconde positions (A, B) sont constituées d'une unique surface plane continue (11, 12), caractérisé par le fait que ladite pièce cylindrique (10', 20) est placée d'un côté de ladite surface, la distance entre deux quelconques encoches diamétralement opposées ($C_1$,... $C_n$) de ce cylindre étant la même que la distance entre lesdites première et seconde positions (A, B), l'action desdits moyens poussoirs pour amener et sortir des pièces (1) dans lesdites encoches et en dehors de celles-ci étant orientée parallèlement audit axe (X).

4. Dispositif selon la revendication 3, dans lequel lesdites première et seconde positions (A, B) sont toutes deux formées sur la surface d'un convoyeur linéaire (11) supportant un certain nombre d'objets (1) également espacés reposant en alternance sur une surface et sur la surface opposée, un nombre pair desdits objets (1) se trouvant entre lesdites première et seconde positions (A, B).

5. Dispositif selon la revendication 3, dans lequel lesdites première et seconde positions (A, B) se trouvent toutes deux sur la périphérie d'une platine tournante (12) ayant des zones alternativement d'une épaisseur plus grande et plus mince dans les zones associées où reposent les objets (1).

**_Fig.1_**

**_Fig.2_**

**_Fig.3_**

_Fig.4_

_Fig.4a_

*Fig.5*

*Fig.5a*